# EUROPÄISCHE PATENTANMELDUNG

(11) **EP 4 591 709 A1**
(43) Veröffentlichungstag der Anmeldung: **30.07.2025**
(21) Anmeldenummer: 24401004.7
(22) Anmeldetag: 25.01.2024
(51) Int. Cl.: A01M 29/30, E02D 7/18, E02D 13/02

(54) **VORRICHTUNG UND VERFAHREN ZUM EINBAU VON VERTIKALEN WÜHLTIERSCHUTZGITTERN**

(71) Anmelder: Ingenieur Wasser und Tiefbau GmbH Frankfurt (Oder), 15234 Frankfurt (Oder) (DE)
(72) Erfinder: Herrmann, Kai, 15324 Letschin (DE)
(74) Vertreter: Rumrich, Gabriele

(57) **Zusammenfassung**

Die Erfindung betrifft eine Vorrichtung zum Einbau von vertikalen Wühltierschutzgittern, folgend nur Gitter genannt, in einem Boden mit einem sich entlang einer Längsachse erstreckenden Trägerblech (1) mit einer Montageseite und einer Rückseite und mit einem Aufnahmebereich für das Gitter und einem mit dem Trägerblech (1) verbindbaren Halteblech (2), wobei das Gitter auf der Montageseite im Aufnahmebereich des Trägerblechs zwischen dem Trägerblech (1) und dem Halteblech (2) positionierbar ist, wobei das Trägerblech (1) an seinem in Einbaurichtung in Richtung des Bodens weisenden Ende einen, an den Aufnahmebereich angrenzenden Endbereich aufweist, wobei der Endbereich gegenüber dem Aufnahmebereich auf der Montageseite hervorsteht. Des Weiteren betrifft die Erfindung ein Verfahren zum Einbau von vertikalen Wühltierschutzgittern, wobei ein Gitter in einer Vorrichtung zwischen einem Trägerblech (1) und einem Halteblech (2) fixiert und in eine Bauwerksachse in den Boden beziehungsweise das Erdreich eingebaut und die Verbindung nach dem Einbau getrennt wird, wobei das Halteblech aus dem Boden gezogen und auf einem zweiten Trägerblech, mit darauf positioniertem zweiten Gitter abgelegt und nachfolgend mit dem Trägerblech verbunden wird und dass im nächsten Verfahrensschritt das zweite Trägerblech mit dem zweiten Gitter und Halteblech in eine Bauwerksachse in den Boden neben dem ersten Trägerblech und ersten Gitter eingebaut wird derart, dass die Vorrichtung mit dem zweiten Gitter und das im Boden verbliebene Trägerblech mit dem ersten Gitter einen Überlappungsbereich für das erste und zweite Gitter bilden, wobei die Verbindung des zweiten Trägerblechs und des Halteblechs nach dem Einbau getrennt wird und nach der Trennung das Halteblech und das erste Trägerblech gezogen werden und das zweite Formblech mit dem zweiten Gitter im Boden verbleibt wobei beim Herausziehen des Trägerblechs ein Luftspalt mittels des hervorstehenden Endbereichs zwischen dem Erdreich und dem Gitter erzeugt wird derart, dass das Erdreich einen passiven Erddruck aufbaut und in das Gitter rutscht derart, dass das Gitter im Boden mittels des Erddrucks fixiert wird.

## Beschreibung

Die Erfindung betrifft eine Vorrichtung und ein Verfahren zum Einbau von vertikalen Wühltierschutzgittern und findet insbesondere für Uferbefestigungen und Böschungen als Schutz vor Beschädigungen durch Wühltiere Anwendung.

Durch die Wiederverbreitung des Bibers in Mitteleuropa sind umfangreiche Maßnahmen notwendig, um Erddämme, Straßen und Uferbereiche zu schützen. Dafür werden Biberschutzgitter auf Böschungen aufgelegt und im Fußbereich (Anschluss an das Gewässer) möglichst tief eingebaut (siehe hierzu auch die Merkblätter 247/1997 des DVWK).

Der Einbau von Wühltierschutzgittern erfolgt überall dort, wo z.B. durch Biber oder andere Wühltiere, Uferbefestigungen oder Böschungen vor Schäden geschützt werden müssen. Die Fußsicherung dieser Erdbauwerke erfolgte bisher durch den vertikalen Einbau von Schutzgittern in einem temporären offenen Graben. Dafür sind entsprechend aufwendige Verbau-, Erd-, und Wasserhaltungsarbeiten notwendig, beziehungsweise werden kostenintensive Stahlspundwände eingebaut.

Aus der Druckschrift DE 20 2015 105 518 U1 ist eine Tierabwehreinrichtung beschrieben, bestehend aus einem an einer Böschung eines wasserenthaltenden Beckens oder eines wasserführenden Kanals anordenbaren bzw. angeordneten Metallgitter, aus einer Verankerungseinrichtung sowie aus einem Mittel, um eine Anhebung des Metallgitters von der Böschung zu unterbinden. Die Verankerungseinrichtung verhindert eine nach unten gerichtete Bewegung des Metallgitters. Derartige Schutzgitter können problemlos von den abzuwehrenden Tieren untergraben werden.

Die Druckschrift DE 94 18 197 U1 beschreibt eine Gartenbeeteinfassung aus Kunststoffplatten zum Schutz vor Wühlmäusen und Schnecken. Es werden zusammensteckbare Kunststoffplatten beschrieben, die in gezogene Kunststoffpfosten steckbar sind. Die Zusatzgitter sind in verschiedenen Längen ausgebildet. Als Gartenbeeteinfassung werden Pfosten, Platte, und bei Bedarf Gitter eingegraben. Durch die Einfassung entsteht ein natürliches Hindernis für Wühlmäuse, für eine Uferbefestigung gegen größere Nagetiere ist diese Vorrichtung jedoch nicht geeignet.

Aus der Druckschrift EP 3 696 328 A1 ist eine Vorrichtung und ein Verfahren zum Einbau von vertikalen Wühltierschutzgittern bekannt. Die Vorrichtung weist ein erstes Formblech in Form eines Trägerblechs und ein zweites Formblech in Form eines Deckels auf, wobei das erste und zweite Formblech parallel zueinander beabstandet angeordnet sind. Das Gitter ist zwischen dem ersten und zweiten Formblech einlegbar derart, dass das erste und zweite Formblech eine Schutzhülle für das Gitter bilden.

Des Weiteren wird ein zugehöriges Verfahren zum Einbau von vertikalen Wühltierschutzgittern beschrieben, wobei ein Gitter in einer Vorrichtung zwischen einem ersten Formblech in Form eines Trägerbleches und einem zweiten Formblech in Form eines Deckels mittels einer Verbindung des ersten und zweiten Formbleches fixiert und in eine Bauwerksachse in den Boden eingebaut wird und dass die Verbindung nach dem Einbau getrennt wird und die Formbleche einzeln aus dem Boden herausgezogen werden sodass das Gitter im Boden verbleibt. Bei der Nutzung der Vorrichtung und des Verfahrens hat sich jedoch gezeigt, dass die Schutzgitter beim Herausziehen der Formbleche mit diesen zumindest teilweise herausgezogen werden.

Aufgabe der Erfindung ist es, eine Vorrichtung und ein Verfahren zum Einbau von vertikalen Wühltierschutzgittern zu entwickeln, die einen Schutz von Uferbefestigungen und Böschungen vor Wühltieren wie Biber, Bisamratten und anderen Schadtieren gewährleistet, wobei eine erhöhte Zuverlässigkeit in Bezug auf die Einbauposition der Gitter im Boden insbesondere gegenüber der EP 3 696 328 A1 gewährleistet werden soll.

Diese Aufgabe wird mit den kennzeichnenden Merkmalen des ersten und elften Patentanspruchs gelöst.

Vorteilhafte Ausgestaltungen ergeben sich aus den Unteransprüchen.

Die Vorrichtung zum Einbau von vertikalen Wühltierschutzgittern, folgend nur Gitter genannt, in einem Boden weist ein sich entlang einer Längsachse erstreckendes Trägerblech mit einer Montageseite und einer Rückseite und mit einem Aufnahmebereich für das Gitter auf. Des Weiteren umfasst die Vorrichtung ein, mit dem Trägerblech verbindbares Halteblech, wobei das Gitter auf der Montageseite im Aufnahmebereich des Trägerblechs zwischen dem Trägerblech und dem Halteblech positionierbar ist. Erfindungsgemäß weist das Trägerblech an seinem in Einbaurichtung in Richtung des Bodens weisenden Ende einen, an den Aufnahmebereich angrenzenden Endbereich auf, wobei der Endbereich gegenüber dem Aufnahmebereich auf der Montageseite hervorsteht.

Vorteilhafter Weise ist der Endbereich ein gegenüber der Längsachse des Trägerblechs abgewinkeltes Plattenelement. Besonders vorteilhaft hat ist der Endbereich zu dem Aufnahmebereich in einem Winkel von 125 bis 155° ausgebildet.

In einer vorteilhaften Ausgestaltung der Erfindung ist der Endbereich derart ausgerichtet, dass er das Halteblech im, mit das Trägerblech verbundenen Zustand überragt. Besonders vorteilhaft ist eine Länge von 2,5 bis 5 cm des Endbereichs. In Abhängigkeit der Länge des Endbereichs wird ein Luftspalt im Boden beim herausziehen des Trägerblechs erzeugt.

Das Trägerblech und Halteblech sind mittels Montagemitteln an einem oberen Ende und dem unteren Ende miteinander verbunden. Diese Montagemittel können in Form von Hakenverbindungen ausgebildet sein, wobei das Trägerblech und Halteblech unten durch einfaches Einhaken miteinander verbunden sind. Dazu können an dem Halteblech wenigstens ein, bevorzugt zwei längliche Zapfen ausgebildet sein, die in Laschen am unteren Ende des Trägerblechs eingreifen. Die Laschen können schwenkbar ausgebildet sein. Am oberen Ende kann mittels Bolzen eine kraftschlüssige Verbindung zwischen den beiden Blechen hergestellt werden. Das Schutzgitter befindet sich jetzt zwischen dem Trägerblech und Halteblech im Aufnahmebereich des Trägerblechs.

Für eine optimierte Verbindung des Trägerblechs und Halteblechs sind in den Endbereich bevorzugt Unterbrechungen für die unteren Montagemittel vorgesehen. Die Montagemittel können durch diese Unterbrechungen hindurchreichen oder auf Höhe des Endbereichs abschließen.

Die Materialstärke wenigstens eines Bauteils der Vorrichtung beträgt bevorzugt zwischen 5 und 8 mm. Das betrifft das Trägerblech, das Halteblech oder den Endbereich des Trägerblechs. Der Endbereich kann einteilig mit dem Trägerblech ausgebildet sein. Jedoch ist auch ein mehrteiliger Aufbau möglich, wobei hier bevorzugt eine form-, stoff- oder kraftschlüssige Verbindung genutzt wird. Beispielsweise kann der Endbereich mittels Schweißens an dem Trägerblech montiert sein. Eine alternative Möglichkeit wäre eine Schraubenverbindung.

Die Vorrichtung weist in einer vorteilhaften Ausgestaltung zu der Längsachse parallele zueinander abgewinkelte Segmente auf. Dadurch kann die Stabilität innerhalb der Vorrichtung erhöht werden.

Vorteilhafter Weise weist das Trägerblech an seiner, der Montageseite abgewandten Rückseite wenigstens einen Rasthaken zum Fixieren in einer Bestückungsvorrichtung auf.

Besonders bevorzugt weist die Vorrichtung zwei Trägerbleche sowie ein Halteblech zum wechselweisen Bestücken und Einbauen der Gitter im Boden auf. Dabei entspricht das zweite Trägerblech in seinem Aufbau dem ersten Trägerblech.

An dem Halteblech oder Trägerblech kann ein verstärkter Bereich und/oder mehrere verstärkte Bleche zur Aufnahme für Klemmbacken eines konventionellen Spundwandrüttlers oder einer Ramme angeordnet sein.

Das Gitter erfordert in Abhängigkeit beispielsweise des Wasserstands oder der erforderlichen Einbauhöhe bestimmte Abmessungen. Der Zuschnitt der Gitter erfolgt entweder vorab mittels geeigneter Maschinen oder mittels eines Winkelschleifers oder Drahtschneiders direkt am Ort des Verbaus, wobei über die Trägertafel hinausstehende Teile des Schutzgitters abgetrennt werden können.

Des Weiteren umfasst die Erfindung ein Verfahren zum Einbau von vertikalen Wühltierschutzgittern, wobei ein Gitter in der erfindungsgemäßen Vorrichtung zwischen einem Trägerblech und einem Halteblech fixiert und in eine Bauwerksachse in den Boden beziehungsweise das Erdreich eingebaut wird. Nachfolgend wird die Verbindung nach dem Einbau getrennt. Nach dem erfindungsgemäßen Verfahren wird das Halteblech aus dem Boden gezogen und auf einem zweiten Trägerblech, mit darauf positioniertem zweitem Gitter abgelegt und nachfolgend mit dem Trägerblech verbunden. Im nächsten Verfahrensschritt wird das zweite Trägerblech mit dem zweiten Gitter und dem Halteblech in eine Bauwerksachse in den Boden neben dem, im Boden verbliebenen ersten Trägerblech und ersten Gitter eingebaut derart, dass die Vorrichtung mit dem zweiten Gitter und das im Boden verbliebene Trägerblech mit dem ersten Gitter einen Überlappungsbereich für das erste und zweite Gitter bilden, wobei die Verbindung des zweiten Trägerblechs und des Halteblechs nach dem Einbau getrennt wird und nach der Trennung das Halteblech und das erste Trägerblech gezogen werden und das zweite Trägerblech mit dem zweiten Gitter im Boden verbleibt. Gemäß dem Verfahren wird beim Herausziehen des Trägerblechs ein Luftspalt mittels des hervorstehenden Endbereichs zwischen dem Erdreich und dem Gitter erzeugt derart, dass das Erdreich einen passiven Erddruck aufbaut und in das Gitter rutscht derart, dass das Gitter im Boden mittels des Erddrucks fixiert wird.

Vorteilhafter Weise wird beim Einbau des zweiten Trägerblechs dieses in einem Überlappungsbereich derart vor dem ersten im Boden verbliebenen Trägerblech positioniert, dass mittels des hervorstehenden Endbereichs eine horizontale, in Richtung des ersten Trägerblechs wirkende Kraft erzeugt wird derart, dass sich die Vorrichtung mit dem einzubauenden zweiten Trägerblech, dem Gitter und dem Halteblech an das, im Boden angeordneten, erste Trägerblech und Gitter andrückt und entlang eines randseitigen Segments des ersten Trägerblechs in den Boden gleitet. Damit wird ein enges Anliegen der Gitter zueinander gewährleistet.

Der Verbleib des ersten Trägerbleches bewirkt einen Schutz des bereits eingebauten Gitters gegenüber dem Einbau des nächsten Gitters.

Durch die Kombination von zwei Trägerblechen entsteht an dem ersten Trägerblech eine Gleitfläche für das zweite Trägerblech, an der das zweite Trägerblech abgeteuft werden kann, ohne das vorhandene Gitter zu beschädigen oder mit in die Tiefe zu ziehen.

Der Einbau der Vorrichtung und des Gitters erfolgt bevorzugt mittels eines Spundwandrüttlers oder einer Ramme. So können konventionelle Baumaschinen verwendet werden.

Des Weiteren kann das Gitter an den, entlang der Bauwerkachse liegenden, Randbereichen mittels Bewehrungsstahl verstärkt werden. Dazu wird das Gitter als Rollenware vorkonfektioniert und in einzelne Matten mit passenden Abmessungen zugeschnitten. Nachfolgend erfolgt die Verstärkung der Randbereiche mit Rundstangen. Diese können mittels Ösen an den Gittern befestigt werden. Das Zuschneiden der Matten kann am Ort des Verbaus der Gitter oder zuvor erfolgen. Die Gitter weisen eine Breite von 1,5 bis 4m auf und werden vorzugsweise mit einer Überlappung am Stoß von 0 - 50 cm je nach Anforderung angeordnet. Der Überlappungsbereich kann der Breite eines Segments des Trägerblechs/Halteblechs der Vorrichtung entsprechen.

Bevorzugt ist zum Bestücken der Vorrichtung das Trägerblech auf einer horizontalen Ebene einer Bestückungsvorrichtung angeordnet. Das Gitter wird auf dem horizontal angeordneten Trägerblech aufgelegt und mittels des Halteblechs fixiert. Nachfolgend wird die derart bestückte Vorrichtung mittels einer Hubeinheit der Bestückungsvorrichtung in eine vertikale Position bewegt und von einem Spundwandrüttler oder einer Ramme aufgenommen. Um einen sicheren Stand der in vertikaler Position befindlichen Vorrichtung zu gewährleisten, wird die Vorrichtung mittels des Rasthakens an der Bestückungsvorrichtung fixiert.

Die Bestückungsvorrichtung kann in Form eines ziehbaren Anhängers oder mit einem eigenen Antrieb zum eigenständigen Verfahren ausgerüstet sein. Die horizontale Ebene ist in Form eines Tragrahmens für das Trägerblech ausgebildet und über Drehgelenke und wenigstens einen Hubzylinder mit einem Rahmen der Bestückungsvorrichtung verbunden. Mittels des Hubzylinders ist der Tragrahmen um die Drehgelenke schwenkbar. So kann die Vorrichtung von einer horizontalen in eine vertikale Position verfahren werden, was die Aufnahme durch die Ramme erleichtert. Die Bestückungsvorrichtung kann ein eigenes Hydrauliksystem nutzen. Alternativ kann auf das Hydrauliksystem eines Baggers oder Traktors zurückgegriffen werden. Vorteilhaft können entlang der Bestückungsvorrichtung Trittbretter angeordnet sein, die ein erleichtertes Arbeiten bei der Positionierung der Gitter gewährleisten. Zur Positionierung des Trägerblechs und der Vorrichtung auf der Bestückungsvorrichtung sind am Tragrahmen u-förmige Aufnahmen angeordnet, in denen die Vorrichtung in horizontaler Position eingelegt wird und in vertikaler Position steht. Mit einer derart mobilen Bestückungsvorrichtung kann die Vorrichtung am Ort des Verbaus der Gitter bestückt und eingebaut werden.

Durch die Ausgestaltung der Vorrichtung kann gemäß dem Verfahren mit dem Herausziehen des Halteblechs von der Seite des Halteblechs ein aktiver Erddruck auf das Gitter im Boden aufgebaut werden. Dadurch erfolgt eine erste Fixierung. Durch den passiven Erddruck, welcher beim Herausziehen des Trägerblechs erzeugt wird, wird das Gitter sicher fixiert. Der passive Erddruck ist bis zu dreimal höher gegenüber dem aktiven Erddruck. Durch den anstehenden Erddruck wird ein Herausziehen des Schutzgitters infolge von Mantelreibung der zu ziehenden Vorrichtung verhindert. Unterstützend zur Verringerung der Mantelreibung zwischen der Vorrichtung und dem Schutzgitter ist der Einsatz eines Vibrators/ Spundwandrüttlers.

Mit der neuen Vorrichtung und dem Verfahren lassen sich die Schutzgitter in verschiedenen Abmessungen und Typen in geschlossener Bauweise vertikal in die zu sichernden Bodenbereiche einbauen. Gegenüber dem Stand der Technik kann die Effizienz des Verfahrens um mehr als 30 % gesteigert werden. Die Gitter bleiben zuverlässig im Boden und bilden durch die Überlappung eine undurchdringliche Barriere. Die Einbautiefe wird durch die Vorkonfektionierung sicher erreicht. Der Einbau erfolgt bis 1,5 m unter Gewässersohle.

Die Erfindung wird nachfolgend mittels Zeichnungen dargestellt.

Es zeigen:
- Figur 1: eine Vorderansicht des Trägerblechs,
- Figur 2: eine Seitenansicht des Trägerblechs gemäß Figur 1,
- Figur 3: eine schematische Darstellung eines Endbereiche des Trägerblechs,
- Figur 4: eine alternative Ausgestaltung des Endbereichs,
- Figur 5: eine weitere alternative Ausgestaltung des Endbereichs,
- Figur 6: eine schematische Draufsicht auf die Vorrichtung,
- Figur 7: eine Vorderansicht des Halteblechs,
- Figur 8: die unteren Montagemittel des Trägerblechs und Halteblechs in nicht verbundenem und
- Figur 9: in verbundenem Zustand,
- Figur 10: eine Vorrichtung mit einem Trägerblech und einem Halteblech.

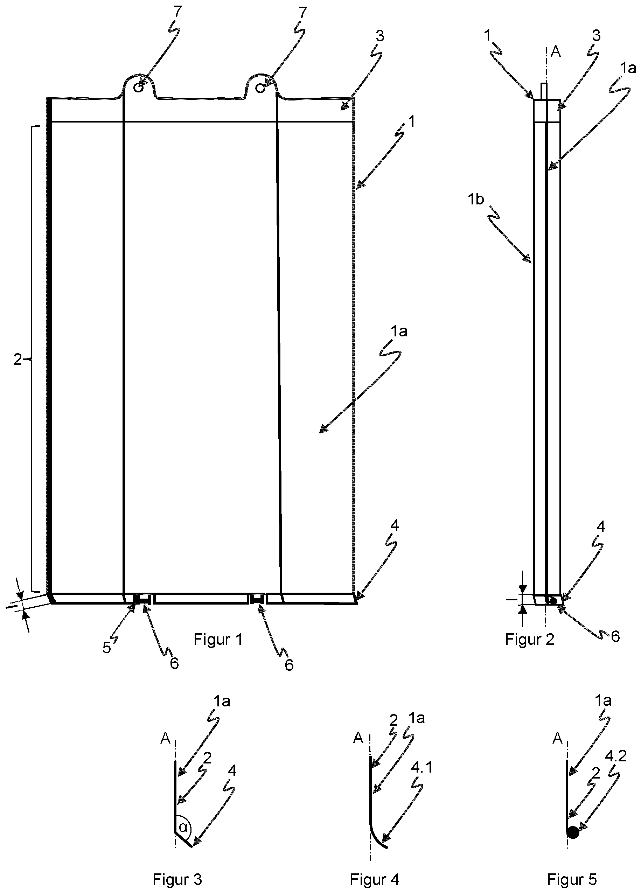

Die Figuren 1 und 2 zeigen ein Trägerblech 1, wobei das Trägerblech 1 sich entlang einer Längsachse A erstreckt und eine Montageseite 1a und eine Rückseite 1b aufweist, wobei auf der Montageseite 1a ein Aufnahmebereich 2 zur Aufnahme eines nicht dargestellten Gitters angeordnet ist. Am oberen Ende des Trägerblechs 1 ist ein verstärkter Bereich 3 zur Aufnahme von Klemmbacken eines Spundwandrüttlers oder einer Ramme vorgesehen. Am unteren Ende der Trägerblechs 1 ist ein Endbereich 4 angeordnet, wobei dieser Endbereich 4 in Form eines abgewinkelten Plattenelements ausgestaltet ist.

Der Endbereich 4 weist vorzugsweise eine Länge I von 2,5 bis 5 cm auf. Des Weiteren sind in dem Endbereich Unterbrechungen 5 mit darin angeordneten unteren Montagemitteln 6 vorgesehen. Die Montagemittel 6 sind bevorzugt als schwenkbare Laschen ausgebildet, in die geeignete Zapfen eingreifen.

Am oberen Ende des Trägerblechs 1 sind Bohrungen 7 für die Aufnahme von Bolzen vorgesehen, wobei mittels der Bolzen eine kraftschlüssige Verbindung zwischen dem Trägerblech 1 und einem Halteblech im verstärkten Bereich 3 erzeugt wird. Die Materialstärke des Trägerblechs 1 und des Endbereichs 4 beträgt vorzugsweise 5 bis 8 mm. Der verstärkte Bereich 3 weist eine höhere Materialstärke auf.

Die Figuren 3, 4 und 5 zeigen drei mögliche Ausgestaltungen des Endbereichs 4, 4.1, 4.2 der Trägerplatte 1. Der Endbereich ist derart gestaltet, dass er an den Aufnahmebereich 2 angrenzt und gegenüber dem Aufnahmebereich 2 auf der Montageseite 1a hervorsteht. Figur 3 zeigt eine Ausgestaltung des Endbereichs 4, wobei der Endbereich 4 ein abgewinkeltes Plattenelement ist. Der Aufnahmebereich 2 erstreckt sich entlang der Längsachse A und bildet mit dem Endbereich 4 einen Winkel α von vorzugsweise 125 bis 155°.

Eine alternative Ausgestaltung des Endbereichs 4 ist in der Figur 4 dargestellt, wobei der Endbereich 4 eine an den Aufnahmebereich 2 angrenzende Rundung 4.1 darstellt. Eine weitere Ausführungsform ist in der Figur 5 dargestellt. Der Endbereich 4 gemäß Figur 5 zeigt einen zylindrischen Körper 4.2 als in Richtung der Montageseite 1a hervorstehendes Element, welches sich am Ende des Aufnahmebereichs 2 erstreckt. Alternativ könnte auch ein rohrförmiges Element Anwendung finden. Die Verbindung des Endbereichs 4.2 kann mittels Schweißens erfolgen.

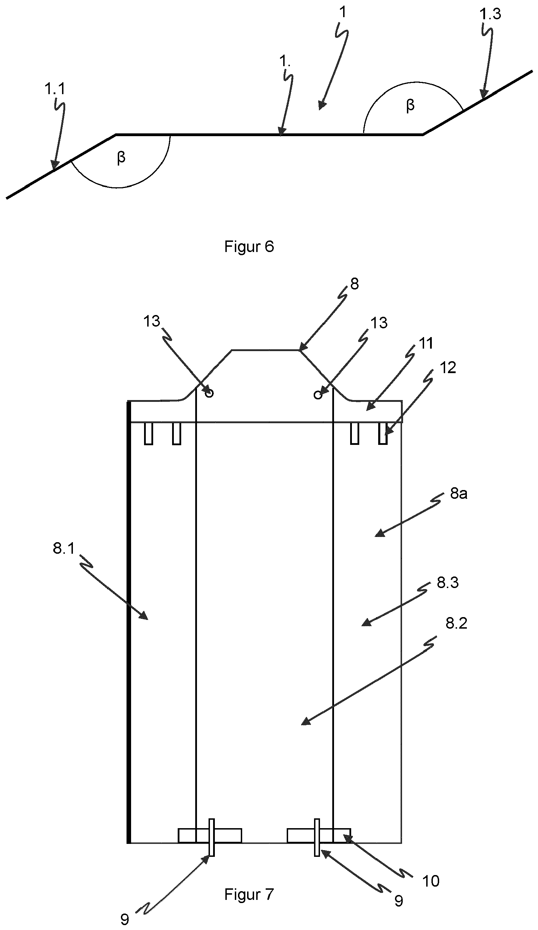

Um den Einbau der Vorrichtung in den Boden zu erleichtern und eine erhöhte Stabilität zu erreichen kann gemäß der schematischen Darstellung in Figur 6 das Trägerblech 1 als auch das nicht dargestellte Halteblech aus einzelnen Segmenten 1.1, 1.2, 1.3 bestehen, wobei die Segmente 1.1, 1.2, 1.3 in einem Winkel β zueinander angeordnet sind. Der Winkel β beträgt vorzugsweise zwischen 140 und 165°.

Das zu der Vorrichtung zugehörige Halteblech 8 ist in der Figur 7 dargestellt. Das Halteblech 8 weist zu dem Trägerblech 1 korrespondierende Segmente 8.1, 8.2, 8.3 mit korrespondierenden Winkeln auf. An der Rückseite 8a des Halteblechs 8 sind am unteren Ende zu den Laschen des Trägerblechs korrespondierende Montagemittel 9 angeordnet, die in Form von Zapfen ausgebildet sind. Die Montagemittel 9 sind an zusätzlichen Verstärkungsplatten 10 angeordnet. Am oberen Ende des Halteblechs 8 ist ein verstärkter Bereich 11 angeordnet, der der Aufnahme der Klemmbacken eines Spundwandrüttlers oder einer Ramme dient. Des Weiteren sind zusätzliche Verstärkungsbleche 12 an der Rückseite 8a vorgesehen. Im verstärkten Bereich sind zusätzliche Bohrungen 13 angeordnet, die bei Montage auf dem Trägerblech mit den Bohrungen 7 des Trägerblechs fluchten und so die Bolzenverbindung gewährleisten. Die Materialstärke des Halteblechs 8 beträgt vorzugsweise 5 bis 8 mm und entspricht damit der Stärke des Halteblechs 1 und des Endbereichs 4. Als Material findet bevorzugt für die gesamte Vorrichtung durchgehärtete Bleche aus verschleißfestem Stahl Anwendung.

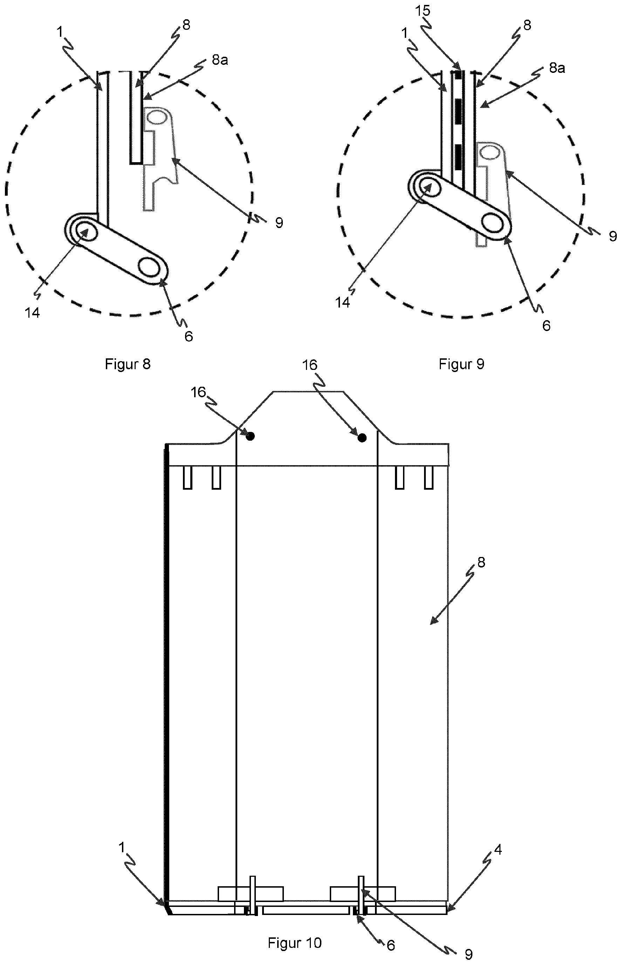

Die Figuren 8 und 9 zeigen die unteren Montagemittel in einer geöffneten und geschlossenen Position. Die ersten unteren Montagemittel 6 sind an dem Trägerblech 1 angeordnet. Die Montagemittel 6 sind laschenförmig ausgebildet und um eine Achse 14 schwenkbar, so dass sie bei Eingreifen der zweiten Montagemittel in Form der Zapfen 9 nach unten geschwenkt werden. Dabei wird das Halteblech 8 nochmals an das Trägerblech 1 herangezogen und das in Figur 9 dargestellte Gitter 15 fest zwischen den Blechen 1, 8 fixiert.

Die Figur 10 zeigt eine erfindungsgemäße Vorrichtung mit einem Trägerblech 1 und einem darauf aufgelegten Halteblech 8. Die Bleche 1, 8 sind miteinander über die unteren Montagemittel 6, 9 und obere Bolzen 16 miteinander verbunden. Der untere Bereich 4 des Trägerblechs 1 ragt unter dem Halteblech 8 hervor.

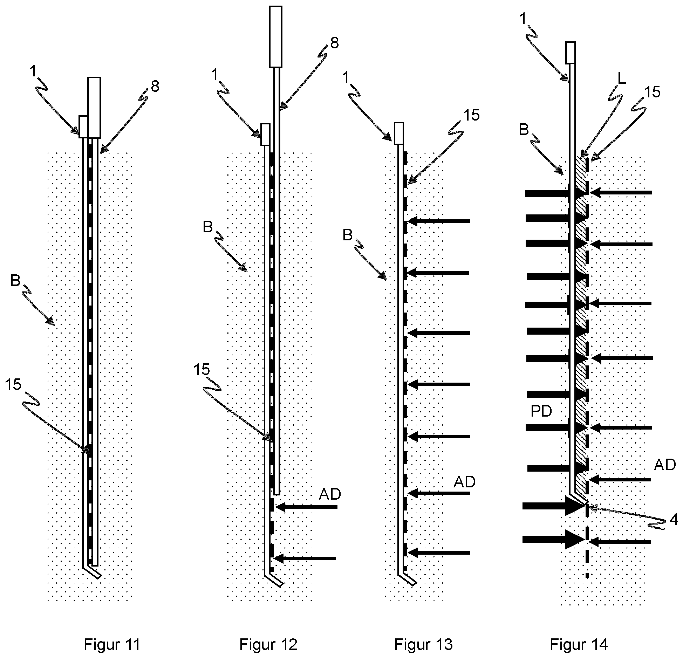

Eine vereinfachte Schnittdarstellung der Vorrichtung im Boden B ist in den Figuren 11 bis 14 dargestellt. Gemäß Figur 11 wird das Trägerblech 1 mit dem Halteblech 8 und dem dazwischen angeordneten Gitter 15 in den Boden B eingebracht. Im nächsten Schritt wird wie in Figur 12 und 13 dargestellt das Halteblech 8 aus dem Boden gezogen. Das Gitter 15 und das Trägerblech 1 verbleiben im Boden. Während dem Ziehen des Halteblechs 8 aus dem Boden baut sich ein aktiver Erddruck AD auf der Seite des Halteblechs 8 auf. Gemäß eines nicht dargestellten Verfahrensschrittes wird nachdem das Halteblech 8 gezogen ist, ein zweites Trägerblech mit dem Halteblech 8 in einem überlappenden Bereich zu dem ersten Trägerblech 1 in den Boden eingebaut. Danach wird das Trägerblech 1 gemäß Figur 14 aus dem Boden B gezogen, wobei sich durch den hervorstehenden Endbereich 4 ein Luftspalt L zwischen dem Gitter 15 und dem Trägerblech 1 bildet. Durch den Luftspalt L wird ein passiver Erddruck PD aufgebaut, der dreimal höher als der aktive Erddruck ist. Durch diesen auf das Gitter 15 wirkenden Druck AD, PD wird das Gitter 15 im Boden B fixiert und kann nicht mehr irrtümlich aus dem Boden herausgezogen werden.

Mit der Vorrichtung und dem zugehörigen Verfahren lassen sich vertikale Schutzgitter an Uferböschungen, Erddämme und anderen zu schützenden Erdbauwerken wirtschaftlich auch in größeren Tiefen einbauen. Baugrundrisiken wie Fließsande und hohe Grundwasserstände usw. können damit vermieden werden. Mit dieser Technologie können aufwendige Verfahren, wie Spundwände, offene Gräben mit Wasserhaltung usw. ersetzt werden.

### Bezugszeichenliste

- 1: Trägerblech
- 1.1: erstes Segment
- 1.2: zweites Segment
- 1.3: drittes Segment
- 1a: Montageseite
- 1b: Rückseite
- 2: Aufnahmebereich
- 3: Verstärkter Bereich
- 4: Endbereich
- 4.1: Rundung
- 4.2: zylindrischer Körper
- 5: Unterbrechungen
- 6: Montagemittel/Laschen
- 7: Bohrung
- 8: Halteblech
- 8.1: erstes Segment
- 8.2: zweites Segment
- 8.3: drittes Segment
- 8a: Rückseite
- 9: Montagemittel/Zapfen
- 10: Verstärkungsplatten
- 11: Verstärkter Bereich
- 12: Verstärkungsbleche
- 13: Bohrung
- 14: Achse
- 15: Gitter
- 16: Bolzen

- A: Längsachse
- AD: aktiver Erddruck
- B: Boden
- L: Luftspalt
- I: Länge Plattenelement
- PD: passiver Erddruck

## Patentansprüche

1. Vorrichtung zum Einbau von vertikalen Wühltierschutzgittern, folgend nur Gitter genannt, in einem Boden mit einem sich entlang einer Längsachse (A) erstreckenden Trägerblech (1) mit einer Montageseite (1a) und einer Rückseite (1b) und mit einem Aufnahmebereich (2) für das Gitter (15) und einem mit dem Trägerblech (1) verbindbaren Halteblech (2), wobei das Gitter (15) auf der Montageseite (1a) im Aufnahmebereich (2) des Trägerblechs (1) zwischen dem Trägerblech (1) und dem Halteblech (2) positionierbar ist, **dadurch gekennzeichnet, dass** das Trägerblech (1) an seinem in Einbaurichtung in Richtung des Bodens weisenden Ende einen, an den Aufnahmebereich (2) angrenzenden Endbereich (4) aufweist, wobei der Endbereich (4) gegenüber dem Aufnahmebereich (2) auf der Montageseite (1a) hervorsteht.

2. Vorrichtung nach Anspruch 1, **dadurch gekennzeichnet, dass** der Endbereich (4) ein gegenüber der Längsachse (A) des Trägerblechs (1) abgewinkeltes Plattenelement (4.1) ist.

3. Vorrichtung nach Anspruch 2, **dadurch gekennzeichnet, dass** der Endbereich (4) zu dem Aufnahmebereich (2) in einem Winkel von 125 bis 155 ° ausgebildet ist.

4. Vorrichtung nach einem der vorangegangenen Ansprüche, **dadurch gekennzeichnet, dass** der Endbereich (4) das Halteblech (8), im mit dem Trägerblech (1) verbundenen Zustand, überragt.

5. Vorrichtung nach einem der vorangegangenen Ansprüche, **dadurch gekennzeichnet, dass** der Endbereich (4) in Form des Plattenelements eine Länge von 2,5 bis 5 cm aufweist.

6. Vorrichtung nach einem der vorangegangenen Ansprüche, **dadurch gekennzeichnet, dass** das Trägerblech (1) und Halteblech (8) mittels Montagemitteln (6, 9) an einem oberen Ende und einem unteren Ende miteinander verbunden sind.

7. Vorrichtung nach einem der vorangegangenen Ansprüche, **dadurch gekennzeichnet, dass** der Endbereich (4) Unterbrechungen (5) für die unteren Montagemittel (6) aufweist.

8. Vorrichtung nach einem der vorangegangenen Ansprüche, **dadurch gekennzeichnet, dass** das Trägerblech (1) zu der Längsachse (A) parallele zueinander abgewinkelte Segmente (1.1, 1.2, 1.3) und das Halteblech (8) zueinander abgewinkelte Segmente (8.1, 8.2, 8.3) aufweist.

9. Vorrichtung nach einem der vorangegangenen Ansprüche, **dadurch gekennzeichnet, dass** das Trägerblech (1) an seiner, der Montageseite (1a) abgewandten Rückseite (1b) mindestens einen Rasthaken zum Fixieren in einer Bestückungsvorrichtung aufweist.

10. Vorrichtung nach Anspruch 1, **dadurch gekennzeichnet, dass** die Vorrichtung ein zweites Trägerblech zum Einbau eines weiteren Gitters aufweist.

11. Verfahren zum Einbau von vertikalen Wühltierschutzgittern, wobei ein Gitter (15) in einer Vorrichtung nach Anspruch 1 zwischen einem Trägerblech (1) und einem Halteblech (8) fixiert und in eine Bauwerksachse in den Boden beziehungsweise das Erdreich eingebaut und die Verbindung nach dem Einbau getrennt wird, **dadurch gekennzeichnet, dass** das Halteblech (8) aus dem Boden gezogen und auf einem zweiten Trägerblech, mit darauf positioniertem zweiten Gitter abgelegt und nachfolgend mit dem Trägerblech verbunden wird und dass im nächsten Verfahrensschritt das zweite Trägerblech mit dem zweiten Gitter und Halteblech (8) in eine Bauwerksachse in den Boden neben dem ersten Trägerblech (1) und ersten Gitter (15) eingebaut wird derart, dass die Vorrichtung mit dem zweiten Gitter und das im Boden verbliebene Trägerblech (1) mit dem ersten Gitter (15) einen Überlappungsbereich für das erste und zweite Gitter (15) bilden, wobei die Verbindung des zweiten Trägerblechs und des Halteblechs (8) nach dem Einbau getrennt wird und nach der Trennung das Halteblech (8) und das erste Trägerblech (1) gezogen werden und das zweite Trägerblech mit dem zweiten Gitter im Boden verbleibt wobei beim Herausziehen des ersten Trägerblechs (1) ein Luftspalt mittels des hervorstehenden Endbereichs (4) zwischen dem Erdreich und dem Gitter (15) erzeugt wird derart, dass das Erdreich einen passiven Erddruck aufbaut und in das Gitter (15) rutscht derart, dass das Gitter (15) im Boden mittels des Erddrucks fixiert wird.

12. Verfahren nach Anspruch 11, **dadurch gekennzeichnet, dass** beim Einbau des zweiten Trägerblechs dieses in einem Überlappungsbereich derart vor dem ersten im Boden verbliebenen Trägerblech positioniert wird, dass mittels des hervorstehenden Endbereichs eine horizontale, in Richtung des ersten Trägerblechs wirkende Kraft erzeugt wird derart, dass sich die Vorrichtung mit dem einzubauenden zweiten Trägerblech, dem Gitter und dem Halteblech an das, im Boden angeordneten, erste Trägerblech und Gitter andrückt und entlang eines randseitigen Segments des ersten Trägerblechs in den Boden gleitet.

13. Verfahren nach Anspruch 11 oder 12, **dadurch gekennzeichnet, dass** der Einbau der Vorrichtung und des Gitters (15) mittels eines Spundwandrüttlers oder einer Ramme erfolgt.

14. Verfahren nach einem der vorangegangenen Ansprüche, **dadurch gekennzeichnet, dass** die entlang der Bauwerkachse liegenden Randbereiche eines Gitters (15) mittels Bewehrungsstahl verstärkt werden.

15. Verfahren nach einem der vorangegangenen Ansprüche, **dadurch gekennzeichnet, dass** mit Herausziehen des Halteblechs (8) von der Seite des Halteblechs (8) ein aktiver Erddruck auf das Gitter (15) im Boden erzeugt wird.

16. Verfahren nach Anspruch 11, **dadurch gekennzeichnet, dass** das Trägerblech (1) auf einer horizontalen Ebene einer Bestückungsvorrichtung aufliegt und dass das Gitter (15) auf dem horizontal angeordnetem Trägerblech (1) aufgelegt und mittels des Halteblechs (8) fixiert wird und dass nachfolgend die derart bestückte Vorrichtung mittels einer Hubeinheit der Bestückungsvorrichtung in eine vertikale Position bewegt und von einem Spundwandrüttler oder einer Ramme aufgenommen wird.
